# EUROPÄISCHE PATENTSCHRIFT

(11) **EP 3 890 921 B1**
(45) Veröffentlichungstag und Bekanntmachung des Hinweises auf die Patenterteilung: **28.06.2023**
(21) Anmeldenummer: 19812719.3
(22) Anmeldetag: 19.11.2019
(51) Int. Cl.: B23Q 3/155, B23Q 11/08

(54) **WERKZEUGMASCHINE ZUR BEARBEITUNG EINES WERKSTÜCKS UND VERFAHREN ZUM BEARBEITEN DES WERKSTÜCKS**
MACHINE TOOL FOR PROCESSING A WORKPIECE AND METHOD FOR PROCESSING THE WORKPIECE
MACHINE-OUTIL SERVANT À USINER UNE PIÈCE ET PROCÉDÉ SERVANT À USINER LA PIÈCE

(30) Priorität: 03.12.2018 DE 102018220866
(43) Veröffentlichungstag der Anmeldung: 13.10.2021
(73) Patentinhaber: Deckel Maho Seebach GmbH, 99846 Seebach (DE)
(72) Erfinder: ENGEL, André, 98596 Brotterode-Trusetal (DE)
(74) Vertreter: MERH-IP Matias Erny Reichl Hoffmann Patentanwälte PartG mbB
(86) Internationale Anmeldenummer: PCT/EP2019/081788
(87) Internationale Veröffentlichungsnummer: WO 2020/114765

(56) Entgegenhaltungen:
- EP-A1- 2 965 862
- CN-A- 108 237 432

## Beschreibung

Die vorliegende Erfindung betrifft eine Werkzeugmaschine zur Bearbeitung eines Werkstücks. Des Weiteren betrifft die vorliegende Erfindung ein Verfahren zur Bearbeitung des Werkstücks an der Werkzeugmaschine.

### HINTERGRUND DER ERFINDUNG

Fahrständermaschinen sind heutzutage Stand der Technik, wenn es um die spanende Bearbeitung von großvolumigen und/oder sehr schweren Werkstücken geht. Dabei können die Maschinen eine Werkzeugwechseleinrichtung aufweisen, die sich hinter einer zu öffnenden Verdeckung befindet und Werkzeuge für die Bearbeitung des Werkstücks bereithält. Soll nun das Werkzeug gewechselt werden, so öffnet sich die Verdeckung und die Werkzeugwechseleinrichtung kann zu der Arbeitsspindel verfahren werden, um dort den Werkzeugwechsel durchzuführen.

Dabei ist es bei den bekannten Werkzeugmaschinen häufig so, dass die Arbeitsspindel während des Werkzeugwechsels im Wesentlichen im Arbeitsraum der Werkzeugmaschine verbleibt. Hier besteht jedoch die große Gefahr, dass die Werkzeugwechseleinrichtung beim Verfahren an die Arbeitsspindel und/oder beim Werkzeugwechsel selbst mit dem auf dem Werkstücktisch aufgespannten Werkstück kollidiert und hierdurch Schäden an der Werkzeugwechseleinrichtung und/oder am Werkstück entstehen können.

Weiterhin sind die bekannten Werkzeugmaschinen oftmals dahingehend konzipiert, dass ein solcher Werkzeugwechsel an einer festgelegten Position innerhalb der Werkzeugmaschine zu erfolgen hat, nämlich in der Regel in der Nähe eines an der Werkzeugmaschine feststehenden Werkzeugmagazins. Das führt dazu, dass die Arbeitsspindel für jeden Werkzeugwechselvorgang an die festgelegte Position verfahren werden muss, was zu einer Erhöhung der Bearbeitungszeit des jeweiligen Werkstücks führt.

EP 2 965 862 A1 offenbart eine Werkzeugmaschine nach dem Oberbegriff des Anspruchs 1.

### ZUSAMMENFASSUNG DER ERFINDUNG

Eine Aufgabe der vorliegenden Erfindung ist es daher, eine Werkzeugmaschine zur Bearbeitung eines Werkstücks bereitzustellen, mit dem die oben genannten Probleme vermieden werden.

Des Weiteren ist es Aufgabe der vorliegenden Erfindung, ein Verfahren zur Bearbeitung des Werkstücks an der Werkzeugmaschine bereitzustellen.

Die Aufgaben werden gelöst durch eine Werkzeugmaschine nach Anspruch 1 und ein Verfahren nach Anspruch 14.

Die abhängigen Ansprüche beziehen sich auf vorteilhafte Ausführungsbeispiele der erfindungsgemäßen Werkzeugmaschine sowie des erfindungsgemäßen Verfahrens.

Die erfindungsgemäße Werkzeugmaschine zum Bearbeiten eines Werkstücks weist auf: einen Maschinentisch zum Aufspannen des Werkstücks, eine Arbeitsspindel zum Aufnehmen eines Werkzeugs zur Bearbeitung des Werkstücks, einen Arbeitsraum, der im Wesentlichen durch den Maschinentisch und mindestens einer ersten Abdeckung begrenzt wird, und einen Werkzeugwechsler, der außerhalb des Arbeitsraums angeordnet ist und der zum Wechseln des in der Arbeitsspindel aufgenommenen Werkzeugs eingerichtet ist, wobei die Werkzeugmaschine ferner dazu eingerichtet ist, dass bei einem Werkzeugwechsel die erste Abdeckung verfahren wird, wodurch der Arbeitsraum der Werkzeugmaschine um einen Werkzeugwechselbereich erweitert und eine Zugangsfläche freigegeben wird, durch die hindurch der Werkzeugwechsler in den Werkzeugwechselbereich verfahren werden kann, und die Arbeitsspindel derart in dem Werkzeugwechselbereich positioniert wird, dass der Werkzeugwechsler das von der Arbeitsspindel aufgenommene Werkzeug innerhalb des Werkzeugwechselbereichs auswechseln kann.

Durch die erfindungsgemäße Werkzeugmaschine konnte erreicht werden, dass ein Werkzeugwechsel außerhalb des Arbeitsraumes stattfinden kann und dennoch einen möglichst kompakten Aufbau der Werkzeugmaschine zu gewährleisten. Hierbei ist es nun möglich, eine Kollisionsgefahr von Werkzeugwechsler mit dem Werkstück bzw. möglichen Spannmitteln des Werkstücks zu umgehen, da keine Störkontur seitens der Arbeitsspindel oder des Werkzeugwechslers mit dem Arbeitsraum besteht.

Ferner ist die erfindungsgemäße Werkzeugmaschine derart eingerichtet, dass die Erweiterung des Arbeitsraumes um den Werkzeugwechselbereich und die Freigabe des Zugangs bzw. der Zugangsfläche für den Werkzeugwechsler, durch die hindurch der Werkzeugwechsler in den Werkzeugwechselbereich verfahren werden kann, zeitgleich erfolgt, da für beide Vorgänge nur die eine Bewegung der ersten Abdeckung nötig ist.

Durch den Einsatz eines separaten Antriebes für die erste Abdeckung können daher die beiden Schritte parallel erfolgen, was zu einer Reduzierung der Werkzeugwechselzeit und der Span-zu-Spanzeit führt.

Weiterhin konnte bei der erfindungsgemäßen Werkzeugmaschine erreicht werden, dass eine Auskragung der Z-Achse bzw. die Länge des Trägers, an dessen Endabschnitt die Arbeitsspindel vorgesehen ist, verringert werden. Dadurch konnte die Maschinendynamik erhöht werden und die Präzision der Werkzeugmaschine optimiert werden.

Zudem ermöglicht die erfindungsgemäße Werkzeugmaschine, Materialspäne und Kühlschmiermittel, die sich während der Bearbeitung auf dem Träger absetzen, durch das Vorsehen von Abstreifern von dem Träger zu entfernen, so dass sich die Materialspäne weder auf den Träger ablagern noch dass die Materialspäne zu den Zustellmechaniken der Arbeitsspindel (entlang der x-, y- und z-Achse) gelangen können. Dies erhöht zusätzlich die Zuverlässigkeit der Werkzeugmaschine.

Ferner konnte durch das seitlich neben dem Träger mitgeführte Werkzeugmagazin der Aufbau der Werkzeugmaschine noch kompakter ausgestaltet werden, so dass die Werkzeugwechselzeit erheblich reduziert werden konnte.

Zudem weist die erfindungsgemäße Werkzeugmaschine aufgrund des kompakteren Aufbaus eine höhere Steifigkeit bei gleicher oder geringerer Gussmasse auf, was sich zusätzlich positiv auf die thermische Stabilität und in einer höheren Geometriegenauigkeit niederschlägt. Auch die Maschinendynamik konnte hierdurch positiv beeinflusst werden.

Eine vorteilhafte Weiterbildung der Werkzeugmaschine besteht darin, dass der Arbeitsraum der Werkzeugmaschine im Wesentlichen durch den Maschinentisch, der ersten Abdeckung und einer zweiten Abdeckung begrenzt wird.

Dabei konnte der für die Bearbeitung des Werkstücks zur Verfügung stehende Arbeitsraum durch das Prinzip mit der verfahrbaren, ersten Abdeckung und der zweiten Abdeckungals Trennwand zwischen Arbeitsraum und Fahrständer der Werkzeugmaschine vergrößert werden.

Weiterhin ist es eine vorteilhafte Weiterbildung der Werkzeugmaschine, dass die freigegebene Zugangsfläche im Wesentlichen senkrecht zu der zweiten Abdeckung verläuft.

Zudem kann die erfindungsgemäße Werkzeugmaschine vorteilhaft dadurch weitergebildet werden, dass die freigegebene Zugangsfläche im Wesentlichen senkrecht zu dem Maschinentisch verläuft.

In beiden Fällen wird dadurch ermöglicht, dass bei der Verfahrbewegung der ersten Abdeckung gleichzeitig eine Freigabe der Zugangsfläche für den Werkzeugwechsler erfolgen kann. Das spart, wie bereits weiter oben dargelegt, deutlich Werkzeugwechselzeit, so dass Werkstücke zügiger mit verschiedenen Werkzeugen bearbeitet werden können.

Weiterhin ist es möglich, die erfindungsgemäße Werkzeugmaschine dadurch besonders vorteilhaft weiterzubilden, dass die Zugangsfläche während der Bearbeitung des Werkstücks durch die erste Abdeckung und die zweite Abdeckung von dem Arbeitsraum der Werkzeugmaschine getrennt ist, wobei die erste Abdeckung und die zweite Abdeckung während der Bearbeitung des Werkstücks im Wesentlichen koplanar zueinander angeordnet sind und den Werkzeugwechselbereich von dem Arbeitsraum trennen.

Eine Abtrennung des Werkzeugwechselbereiches und der Zustellmechanik der Werkzeugspindel vom Arbeitsraum während der Bearbeitung des Werkstücks wirkt sich positiv auf die Zuverlässigkeit der Werkzeugmaschine aus, da keine Materialspäne oder Kühlschmiermittel in den Werkzeugwechselbereich oder in die Zustellmechaniken gelangen und diese gegebenenfalls verschmutzen und/oder beschädigen können.

Eine besonders vorteilhafte Weiterbildung der erfindungsgemäßen Werkzeugmaschine besteht darin, dass mindestens die erste Abdeckung in einer Richtung aus dem Arbeitsraum heraus verfahren wird, um den Arbeitsraum der Werkzeugmaschine um den Werkzeugwechselbereich zu erweitern.

Hierdurch ist es möglich, den Arbeitsraum direkt um den Werkzeugwechselbereich zu erweitern, so dass der Werkzeugwechsel eben nicht innerhalb des Arbeitsraumes der Werkzeugmaschine stattfinden muss, wodurch es eventuell zur Kollision des Werkzeugwechslers mit dem Werkstück und/oder den Spannmitteln des Werkstücks kommen könnte.

Zudem kann die erfindungsgemäße Werkzeugmaschine dadurch vorteilhaft weitergebildet werden, indem mindestens die erste Abdeckung durch einen separaten Antrieb unabhängig von dem Antrieb zum Verfahren der Arbeitsspindel verfahren wird.

Dabei ist es insbesondere von Vorteil, wenn ein Verfahren der ersten Abdeckung unabhängig von der Verfahrbewegung der Arbeitsspindel erfolgen kann, da nur so zum Beispiel die Abstreifer die auf dem Träger angesammelten Materialspäne sowie das Kühlschmiermittel / den Kühlschmierstoff zuverlässig entfernen können.

Zusätzlich kann die erfindungsgemäße Werkzeugmaschine dadurch vorteilhaft weitergebildet werden, dass die Arbeitsspindel an einem Endabschnitt eines verfahrbaren Trägers angeordnet ist, der in Längsrichtung durch eine Öffnung in der ersten Abdeckung hindurch verfährt.

Durch die Öffnung in der ersten Abdeckung wird ermöglicht, dass der Träger und somit die Arbeitsspindel unabhängig von der ersten Abdeckung verfahren werden kann.

Erfindungsgemäß kann die Werkzeugmaschine dadurch weitergebildet werden, dass die Aufspannfläche des Maschinentisches eine x-y-Ebene aufspannt, und die erste Abdeckung im Wesentlichen eine x-z-Ebene aufspannt.

Hierdurch wird deutlich, dass die Aufspannfläche des Maschinentisches und die erste Abdeckung (sowie auch die zweite Abdeckung) im Wesentlichen senkrecht zueinander angeordnet sind.

Eine vorteilhafte Weiterbildung der erfindungsgemäßen Werkzeugmaschine ist es, dass die Arbeitsspindel dadurch in dem Werkzeugwechselbereich positioniert wird, dass der Träger entlang seiner Längsrichtung verfahren wird, um die Arbeitsspindel in Richtung der y-Achse zu positionieren.

Zudem kann die erfindungsgemäße Werkzeugmaschine dadurch besonders vorteilhaft weitergebildet werden, dass der Werkzeugwechsler an einem Werkzeugmagazin angeordnet ist, das in x-Richtung seitlich beabstandet neben dem Träger angeordnet ist.

Durch das Vorsehen des Werkzeugmagazins mit Werkzeugwechsler in der Nähe des Trägers und somit in der Nähe der Arbeitsspindel können innerhalb kurzer Zeit benötigte Werkzeuge der Arbeitsspindel zugeführt werden und somit die Bearbeitungszeit eines Werkstücks mit mehreren Werkzeugen deutlich verringert werden.

Besonders vorteilhaft kann die erfindungsgemäße Werkzeugmaschine dadurch weitergebildet werden, dass während der Bearbeitung des Werkstücks das Werkzeugmagazin durch die erste Abdeckung und die zweite Abdeckung von dem Arbeitsraum der Werkzeugmaschine getrennt ist, wobei die erste Abdeckung und die zweite Abdeckung während der Bearbeitung des Werkstücks im Wesentlichen koplanar zueinander angeordnet sind.

Eine Abtrennung des Werkzeugmagazins vom Arbeitsraum während der Bearbeitung des Werkstücks wirkt sich positiv auf die Zuverlässigkeit der Werkzeugmaschine aus, da keine Materialspäne oder Kühlschmiermittel in das Werkzeugmagazin, in die Linearachse oder in den Werkzeugwechsler gelangen und diese gegebenenfalls verschmutzen und/oder beschädigen können.

Eine vorteilhafte Weiterbildung der erfindungsgemäßen Werkzeugmaschine besteht darin, dass während des Verfahrens des Trägers in x-Richtung das Werkzeugmagazin und der Werkzeugwechsler parallel zu dem Träger verfahren werden.

Eine besonders vorteilhafte Weiterbildung ist dadurch gegeben, dass das Werkzeugmagazin in x-Richtung mit der Verfahrbewegung des Trägers (und der Arbeitsspindel) mitgeführt werden kann. Hierdurch kann ein Werkzeugwechsel an einer beliebigen Position der Arbeitsspindel entlang der x-Achse durchgeführt werden, was zusätzliche Zustellbewegungen der Arbeitsspindel vermeidet und dadurch wiederum die Werkzeugwechselzeit als auch die Bearbeitungszeit des Werkstücks verringern kann.

Die erfindungsgemäße Werkzeugmaschine kann dadurch vorteilhaft weitergebildet werden, dass das Werkzeugmagazin eine Linearachse aufweist, die den Werkzeugwechsler durch die Zugangsfläche hindurch in den Werkzeugwechselbereich, um den der Arbeitsraum der Werkzeugmaschine erweitert wurde, verfährt.

Um den Werkzeugwechsler nun in den Werkzeugwechselbereich zu verfahren kann vorteilhaft die Linearachse vorgesehen werden, so dass der Werkzeugwechsler aus seiner von dem Arbeitsraum getrennten Position hinter der ersten und der zweiten Abdeckung in den Werkzeugwechselbereich gelangen kann um dort den Werkzeugwechsel an der Arbeitsspindel durchzuführen.

Zudem kann die erfindungsgemäße Werkzeugmaschine vorteilhaft dadurch weitergebildet werden, dass der Werkzeugwechsler als Doppelgreifer ausgebildet ist.

Es können aber auch jegliche andere Ausgestaltungsformen eines Werkzeugwechslers in der erfindungsgemäßen Werkzeugmaschine vorgesehen sein.

Weiterhin kann die erfindungsgemäße Werkzeugmaschine dadurch vorteilhaft weitergebildet werden, dass die Öffnung in der ersten Abdeckung, durch die sich der Träger hindurch erstreckt, mindestens einen Abstreifer aufweist, der beim Verfahren der Arbeitsspindel in Richtung der ersten Abdeckung an dem Träger befindliche Materialspäne und/oder Kühlschmierstoffe von dem Träger abstreift.

Der mindestens eine Abstreifer ermöglicht in vorteilhafter Weise eine Reinigung/Säuberung des Trägers von anhaftenden Materialspänen und Kühlschmiermitteln.

Weiterhin ist es möglich, die erfindungsgemäße Werkzeugmaschine dadurch vorteilhaft weiterzubilden, dass die Werkzeugmaschine ferner ein Ablaufblech unterhalb der ersten Abdeckung aufweist, das während des Werkzeugwechsels von der ersten Abdeckung abfließende Kühlschmierstoffe sowie Materialspäne auffängt und zu einem Sammelbereich ableitet.

Nachdem der Abstreifer die Materialspäne und das Kühlschmiermittel von dem Träger abgestreift hat, fließt dieses an der ersten Abdeckung herunter und sollte vorteilhafterweise gezielt einer Aufbereitung zugeführt werden. Dies ermöglicht das Ablaufblech, da es die abtropfenden Kühlschmiermittel und die Materialspäne z.B. einem Sammelbereich unterhalb des Maschinentisches zuführt, von da aus das Kühlschmiermittel weitergeleitet und innerhalb oder außerhalb der Werkzeugmaschine aufbereitet werden kann.

Das erfindungsgemäße Verfahren zur Bearbeitung des Werkstücks auf der Werkzeugmaschine gemäß eines NC-Programms, wobei die Werkzeugmaschine einen Maschinentisch zum Aufspannen des Werkstücks, eine Arbeitsspindel zum Aufnehmen eines Werkzeugs zur Bearbeitung des Werkstücks, einen Arbeitsraum, der im Wesentlichen durch den Maschinentisch und mindestens einer ersten Abdeckung begrenzt wird, und einen Werkzeugwechsler, der außerhalb des Arbeitsraums angeordnet ist und der zum Wechseln des in der Arbeitsspindel aufgenommenen Werkzeugs eingerichtet ist, aufweist, weist folgende Schritte auf: Aufspannen des Werkstücks auf dem Maschinentisch der Werkzeugmaschine, Aufnehmen des Werkzeugs zur Bearbeitung des Werkstücks in der Arbeitsspindel, Bearbeiten des Werkstücks gemäß des NC-Programms, wobei folgende Schritte bei einem Werkzeugwechsel durchgeführt werden: Verfahren der ersten Abdeckung, wodurch der Arbeitsraum der Werkzeugmaschine um einen Werkzeugwechselbereich erweitert und eine Zugangsfläche freigegeben wird, durch die hindurch der Werkzeugwechsler in den Werkzeugwechselbereich verfahren werden kann, Verfahren des Werkzeugwechslers durch die freigegebene Zugangsfläche hindurch in den Werkzeugwechselbereich, und Positionieren der Arbeitsspindel derart in dem Werkzeugwechselbereich, dass der Werkzeugwechsler das von der Arbeitsspindel aufgenommene Werkzeug innerhalb des Werkzeugwechselbereichs auswechseln kann.

Das erfindungsgemäße Verfahren ermöglicht nun eine zügigere Bearbeitung eines Werkstücks, insbesondere wenn dafür verschiedene Werkzeuge verwendet werden müssen und daher regelmäßig ein Werkzeugwechsel durchgeführt werden muss.

Zudem weist das Verfahren die Vorteile der beschriebenen erfindungsgemäßen Werkzeugmaschine auf, insbesondere die Vorteile, dass der Werkzeugwechsel außerhalb des Arbeitsbereiches der Werkzeugmaschine stattfinden kann und hierdurch die Kollisionsgefahr von Werkzeugwechsler mit Werkstück bzw. Spannmittel des Werkstücks deutlich reduziert wurde.

Das erfindungsgemäße Verfahren kann dadurch vorteilhaft weitergebildet werden, dass das Verfahren des Werkzeugwechslers durch die freigegebene Zugangsfläche hindurch in den Werkzeugwechselbereich unabhängig von dem Schritt des Positionierens der Arbeitsspindel in dem Werkzeugwechselbereich erfolgt.

Zudem kann das erfindungsgemäße Verfahren dadurch vorteilhaft weitergebildet werden, dass ein Verfahren der Arbeitsspindel in Richtung der ersten Abdeckung unabhängig von dem Verfahren der ersten Abdeckung zur Erweiterung des Arbeitsraums um den Werkzeugwechselbereich erfolgt.

Es ist dabei völlig unerheblich, ob nach dem Erweitern des Arbeitsraumes der Werkzeugmaschine um den Werkzeugwechselbereich zuerst die Arbeitsspindel in dem Werkzeugwechselbereich positioniert wird, oder ob zuerst der Werkzeugwechsler durch die Linearachse in den Werkzeugwechselbereich verfahren wird, oder ob beides gleichzeitig stattfindet. Verschiedene Abfolgen der Verfahrensschritte sind möglich und durch die vorgenannten Beispiele nicht erschöpft.

Durch die erfindungsgemäße Werkzeugmaschine konnte zum einen eine Kollisionsgefahr des Werkzeugwechslers mit weiteren Elementen im Arbeitsraum deutlich reduziert werden, da der Werkzeugwechsel außerhalb des Arbeitsraumes stattfindet. Ferner konnte durch die erfindungsgemäße Werkzeugmaschine ein kompakterer Aufbau der Werkzeugmaschine erreicht werden, was zu einer Erhöhung der Maschinendynamik und der Steifigkeit und somit zur Erhöhung der Präzision bei der Bearbeitung geführt hat. Auch konnte die thermische Stabilität des Maschinenaufbaus dadurch verbessert werden.

Weitere Aspekte und deren Vorteile als auch Vorteile und speziellere Ausführungsmöglichkeiten der vorstehend beschriebenen Aspekte und Merkmale werden aus den folgenden, jedoch in keinster Weise einschränkend aufzufassenden Beschreibungen und Erläuterungen zu den angehängten Figuren beschrieben.

### KURZBESCHREIBUNG DER FIGUREN

- Fig. 1: zeigt schematisch die erfindungsgemäße Werkzeugmaschine in einem geschlossenen Zustand, bei dem kein Werkzeugwechsel erfolgen kann
- Fig. 2: zeigt schematisch eine Detailansicht der erfindungsgemäßen Werkzeugmaschine im Zustand des Werkzeugwechsels mit dem in dem Werkzeugwechselbereich verfahrenen Werkzeugwechsler
- Fig. 3: zeigt schematisch die erfindungsgemäße Werkzeugmaschine in dem geschlossenen Zustand mit einer vom Maschinentisch aufgespannten x-y-Ebene
- Fig. 4: zeigt schematisch die erfindungsgemäße Werkzeugmaschine im Zustand des Werkzeugwechsels mit der vom Maschinentisch aufgespannten x-y-Ebene
- Fig. 5: zeigt schematisch eine Schnittansicht der erfindungsgemäßen Werkzeugmaschine mit der Aufteilung des Arbeitsraums und des Werkzeugwechselbereiches
- Fig. 6: zeigt schematisch den Ablauf eines Werkzeugwechsels in der erfindungsgemäßen Werkzeugmaschine
- Fig. 7: zeigt schematisch das Verfahren der Arbeitsspindel unabhängig von der ersten Abdeckung, wobei die erste Abdeckung zudem Abstreifer für das Abstreifen von Kühlschmiermitteln und Materialspänen aufweist
- Fig. 8: zeigt schematisch die erfindungsgemäße Werkzeugmaschine mit einem seitlich angebrachten Werkzeugmagazin und Linearachse für den Werkzeugwechsler
- Fig. 9: zeigt schematisch eine im Stand der Technik bekannte Werkzeugmaschine, bei der der Werkzeugwechsel im Bereich des Arbeitsraumes stattfindet
- Fig. 10: zeigt ein Ablaufdiagramm eines Ausführungsbeispiels des erfindungsgemäßen Verfahrens zur Bearbeitung des Werkstücks

### DETAILLIERTE BESCHREIBUNG DER FIGUREN UND BEVORZUGTER

### AUSFÜHRUNGSBEISPIELE DER VORLIEGENDEN ERFINDUNG

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

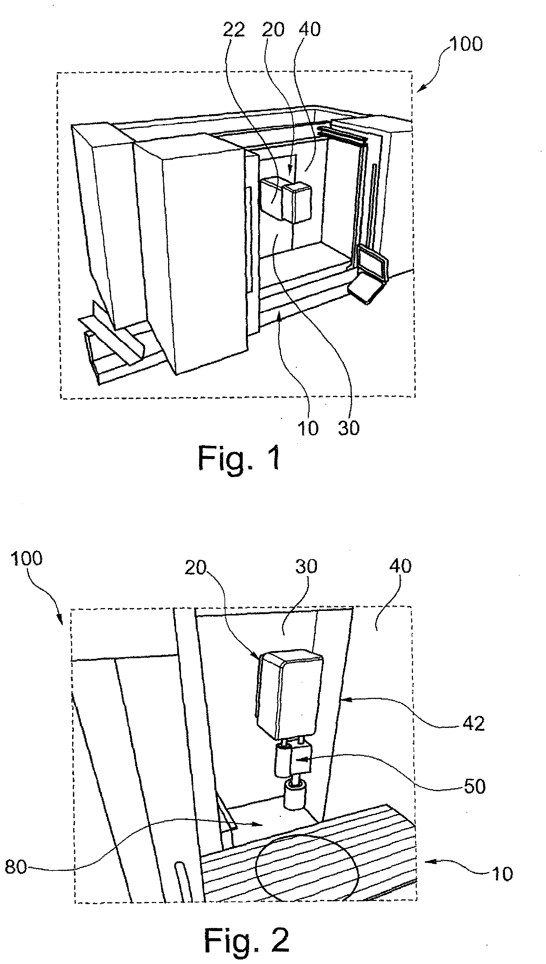

Fig. 1 zeigt schematisch die erfindungsgemäße Werkzeugmaschine 100 in einem geschlossenen Zustand, bei dem kein Werkzeugwechsel erfolgen kann.

Hierbei weist die Werkzeugmaschine 100 neben der an dem Träger 22 angeordneten Arbeitsspindel 20 und dem Maschinentisch 10 die erste Abdeckung 30 und die zweite Abdeckung 40 auf.

Konkret ist in Fig. 1 der Zustand der Werkzeugmaschine 100 zu sehen, bei dem die erste Abdeckung 30 gegenüber der zweiten Abdeckung 40 im Wesentlichen koplanar angeordnet ist. Dies ist zum Beispiel immer dann der Fall, wenn ein Werkstück, das auf dem Maschinentisch 10 aufgespannt ist, durch die Arbeitsspindel 20 mittels eines Werkzeugs bearbeitet werden soll.

In der Arbeitsspindel 20 können dafür verschiedenste Werkzeuge aufgenommen werden, insbesondere Werkzeuge zur spanenden Bearbeitung des Werkstücks, die beispielsweise eine standardisierte Aufnahme wie einen Hohlschaftkegel oder einen Steilkegel aufweisen. Es können aber auch andere, von den Herstellern der Werkzeuge spezifische Werkzeugaufnahmen von der Arbeitsspindel 20 aufgenommen werden. Eine entsprechend gerüstete Arbeitsspindel 20 ist dafür natürlich Voraussetzung.

Zur Aufspannung des Werkstücks auf dem Maschinentisch 10 können wiederum verschiedenste Spannmittel wie Spannpratzen, mechanische oder hydraulische Werkstückspanner, verschiedenste Backenfutter etc. Anwendung finden.

Die genannten Beispiele sind dabei nicht einschränkend zu verstehen und können weitere Möglichkeiten der Aufnahme von Werkzeugen und/oder zur Aufspannung des Werkstücks umfassen.

Fig. 2 zeigt schematisch eine Detailansicht der erfindungsgemäßen Werkzeugmaschine 100 im Zustand des Werkzeugwechsels mit dem in den Werkzeugwechselbereich 80 verfahrenen Werkzeugwechsler 50.

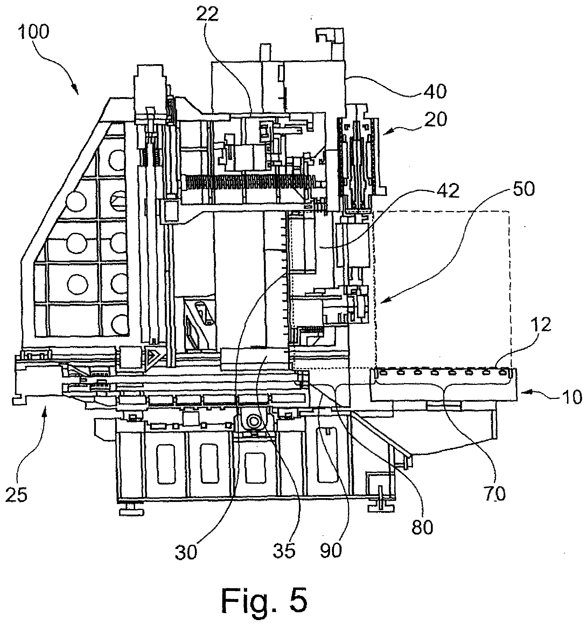

Im Detail zeigt Fig. 2, dass die erste Abdeckung 30 gegenüber der zweiten Abdeckung 40 zurückgesetzt ist. Dieses Zurücksetzen erfolgt durch einen Antrieb 35 (hier nicht gezeigt, siehe hierfür Fig. 5) an der ersten Abdeckung 30, wenn ein Werkzeugwechsel bevorsteht.

Konkret wird dabei die erste Abdeckung 30 durch den Antrieb 35 gegenüber der zweiten Abdeckung 40 zurückgesetzt, um den durch die erste Abdeckung 30 und/oder zweite Abdeckung 40 und den Maschinentisch 10 begrenzten Arbeitsraum 70 (hier nicht gezeigt, siehe hierfür Fig. 5) der Werkzeugmaschine 100 um einen Werkzeugwechselbereich 80 (hier nicht gezeigt, siehe hierfür Fig. 5) zu erweitern.

Dies ermöglicht in einem besonders vorteilhaften Maße, dass der bevorstehende Werkzeugwechsel nicht im Bereich des Arbeitsraumes 70 stattfinden muss, der die Gefahr birgt, dass es während des Werkzeugwechsels oder beim Einfahren des Werkzeugwechslers 50 in den Arbeitsraum 70 zu einer Kollision mit dem Werkstück und/oder anderen Elementen (z.B. Maschinentisch, montierte Spannmittel für das Werkstück etc.) kommen könnte.

Um dies zu verhindern und den Werkzeugwechselprozess sicherer zu machen, empfiehlt es sich daher, den Werkzeugwechsel außerhalb des Arbeitsraumes 70 durchzuführen.

Zudem zeigt Fig. 2 eine besonders vorteilhafte Ausführungsform der erfindungsgemäßen Werkzeugmaschine 100, bei der durch das Zurücksetzen der ersten Abdeckung 30 gegenüber der zweiten Abdeckung 40 zeitgleich eine Zugangsfläche 42 freigegeben wird, durch diese hindurch der Werkzeugwechsler 50 (hier als Doppelgreifer ausgeführt) in den Werkzeugwechselbereich 80 verfahren werden kann.

Dies ist deswegen so vorteilhaft, da durch die Verfahrbewegung der ersten Abdeckung 30 zeitgleich ein Freigeben der Zugangsfläche 42 erfolgt, und hierdurch zusätzliche Antriebe und/oder Führungen für das Freigeben der Zugangsfläche eingespart werden konnten. Weiterhin wird dadurch die Werkzeugwechselzeit insgesamt und die Span-zu-Spanzeit gering gehalten, was die Werkzeugmaschine effektiver arbeiten lässt.

Möglich wird dies, da sich die Zugangsfläche 42 im Wesentlichen senkrecht zu der ersten Abdeckung 30 (und somit auch im Wesentlichen senkrecht zu der zweiten Abdeckung 40) erstreckt. Wird die erste Abdeckung 30 in eine Richtung verfahren, die sich aus dem Arbeitsraum heraus erstreckt, so entsteht zwischen der ersten Abdeckung 30 und der zweiten Abdeckung 40 eine Fläche, die im Wesentlichen senkrecht zu der ersten Abdeckung 30 und der zweiten Abdeckung 40 angeordnet ist. Wird nun diese Fläche dafür genutzt, den Werkzeugwechsler 50 in den entstandenen Werkzeugwechselbereich 80 zu verfahren, so können mit nur einer Verfahrbewegung der ersten Abdeckung 30 sowohl der Werkzeugwechselbereich 80 erzeugt und gleichzeitig ein Zugang in der Fläche (Zugangsfläche 42) für den Werkzeugwechsler 50 freigegeben werden.

Zudem bietet eine derartige Ausgestaltung der ersten Abdeckung 30 und der zweiten Abdeckung 40 den Vorteil, den Aufbau der Werkzeugmaschine 100 im Bereich der für den Werkzeugwechsel benötigten Einrichtungen kompakt zu halten.

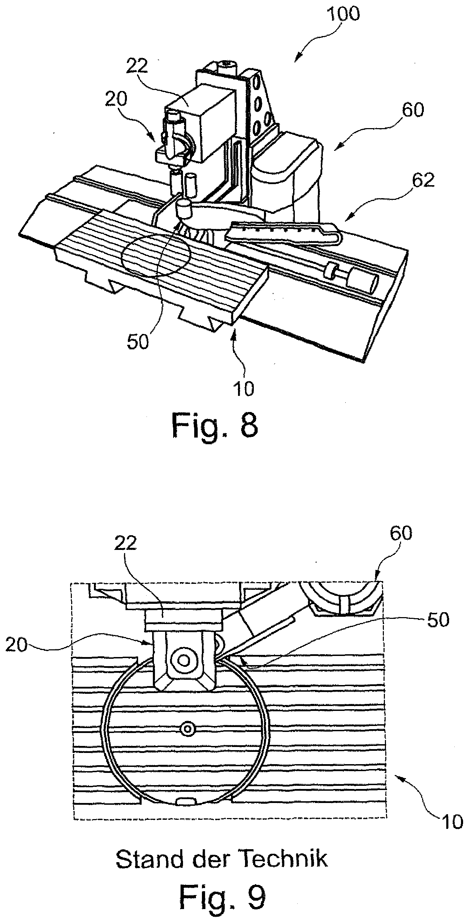

Weiterhin sind in dieser besonders vorteilhaften Ausführungsform der erfindungsgemäßen Werkzeugmaschine 100 der Werkzeugwechsler 50 als auch ein Werkzeugmagazin 60 (hier nicht gezeigt, siehe hierfür Fig. 8) durch die erste Abdeckung 30 und/oder durch die zweite Abdeckung 40 vom Arbeitsraum 70 getrennt.

Dies ist deswegen so vorteilhaft, da bei der spanenden Bearbeitung von Werkstücken zugeführte Kühlschmiermittel als auch vom Werkstück abgetragene Materialspäne im Arbeitsraum 70 verteilt werden, so dass diese natürlich auch den Werkzeugwechsler 50 und/oder das Werkzeugmagazin 60 verschmutzen und infolge dessen eventuell sogar beschädigen können. Ein Schutz dieser Einrichtungen vor den Kühlschmiermitteln und vor den Materialspänen ist daher angebracht und erhöht die Zuverlässigkeit der erfindungsgemäßen Werkzeugmaschine 100.

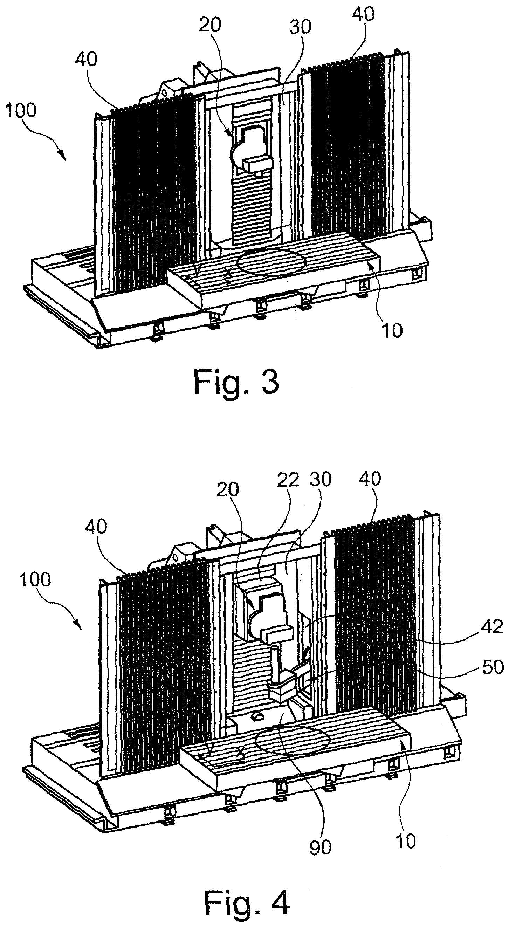

Fig. 3 zeigt schematisch die erfindungsgemäße Werkzeugmaschine 100 in dem geschlossenen Zustand mit einer vom Maschinentisch 10 aufgespannten x-y-Ebene.

Dabei ist die erfindungsgemäße Werkzeugmaschine 100 auf die Elemente der ersten Abdeckung 30 und der zweiten Abdeckung 40 sowie des Maschinentisches 10 und der Arbeitsspindel 20 reduziert, um den geschlossenen Zustand der Werkzeugmaschine 100, wenn erste Abdeckung 30 und zweite Abdeckung 40 im Wesentlichen koplanar zueinander angeordnet sind, noch einmal zu verdeutlichen.

Die zweite Abdeckung 40 kann dabei aus mehreren einzelnen, ineinander verschiebbaren Segmenten bestehen, so dass die erste Abdeckung 30 nicht nur in y-Richtung (entspricht einer Richtung, die sich aus dem Arbeitsraum 70 heraus erstreckt), sondern auch entlang der x-Achse verfahren werden kann. Weiterhin kann die zweite Abdeckung 40 auch aus Segmenten aufgebaut sein, die sich balgähnlich zusammenlegen/zusammenschieben lassen.

Auch die erste Abdeckung 30 kann aus mehreren verschiedenen Abschnitten aufgebaut sein. So können zum Beispiel unterhalb und/oder oberhalb des Trägers 22 der Arbeitsspindel 20, ähnlich wie bei der zweiten Abdeckung 40, mehrere einzelne, ineinander verschiebbare Segmente in der ersten Abdeckung 30 vorgesehen sein, die dem Träger 22 und somit der Arbeitsspindel 20 ermöglichen, in z-Richtung zu verfahren und so eine Zustellung der Arbeitsspindel entlang der drei Achsen (x-, y- und z-Achse) zu ermöglichen.

Fig. 4 zeigt schematisch die erfindungsgemäße Werkzeugmaschine 100 im Zustand des Werkzeugwechsels mit der vom Maschinentisch 10 aufgespannten x-y-Ebene.

Dabei ist in Fig. 4 noch einmal verdeutlicht, wo die Zugangsfläche 42 für den Werkzeugwechsler 50 in dem in Fig. 2 beschriebenen Ausführungsbeispiel angeordnet ist. Wie dargestellt und auch in Fig. 2 bereits beschrieben ist, wird durch eine einzelne Verfahrbewegung der ersten Abdeckung 30 in eine Richtung aus dem Arbeitsraum heraus bzw. vom Arbeitsraum weg der Werkzeugwechselbereich 80 erzeugt und gleichzeitig die Zugangsfläche 42 freigegeben, so dass der Werkzeugwechsler 50 (hier als Doppelgreifer ausgeführt) in den Werkzeugwechselbereich 80 verfahren werden kann. Ein Werkzeugwechsel außerhalb des Arbeitsraumes 70 ist so vorteilhaft möglich.

Weiterhin zeigt Fig. 4 das Ablaufblech 90 unterhalb der ersten Abdeckung 30, das während des Werkzeugwechsels von der ersten Abdeckung 30 abtropfendes Kühlschmiermittel und/oder vom Werkstück abgetragene Materialspäne auffängt und sie einem Sammelbereich, der sich z.B. unterhalb des Maschinentisches 10 befinden kann, zuführt. Aus diesem Sammelbereich heraus können Materialspäne und Kühlschmierstoff einer Aufbereitung innerhalb oder außerhalb der Werkzeugmaschine 100 zugeführt werden.

Die oben genannten Beispiele sind dabei nicht einschränkend aufzufassen. Zum Beispiel kann der Werkzeugwechsler 50 in jeglicher Art ausgeführt sein und ist nicht nur auf das Ausführungsbeispiel eines Doppelgreifers beschränkt.

Fig. 5 zeigt schematisch eine Schnittansicht der erfindungsgemäßen Werkzeugmaschine 100 mit der Aufteilung des Arbeitsraums 70 und des Werkzeugwechselbereiches 80.

Dabei ist in Fig. 5 die Lage des Werkzeugwechselbereiches 80 (hier durch gepunktete Linien dargestellt), um den der Arbeitsraum 70 (hier durch gestrichelte Linien dargestellt) durch das Verfahren der ersten Abdeckung 30 erweitert wird, in Relation zu dem Arbeitsraum 70 gezeigt. Der Arbeitsraum 70 wird im Wesentlichen durch den Maschinentisch 10 (bzw. seiner Aufspannfläche 12) und durch die erste Abdeckung 30 und/oder die zweite Abdeckung 40 begrenzt und definiert, wenn die erste Abdeckung 30 zu der zweiten Abdeckung 40 im Wesentlichen koplanar angeordnet ist.

Wie in Fig. 5 gezeigt, ist nun die erste Abdeckung 30 derart verfahren, dass der Werkzeugwechselbereich 80 in unmittelbarerer Nähe oder direkt angrenzend an dem Arbeitsraum 70 erzeugt wurde. In dem Werkzeugwechselbereich 80 kann nun der Werkzeugwechsler 50 durch die Zugangsfläche 42, die durch die Verfahrbewegung der ersten Abdeckung 30 freigegeben wurde, in den Werkzeugwechselbereich 80 verfahren werden. Wird nun die Arbeitsspindel 20 ebenfalls in dem Werkzeugwechselbereich 80 positioniert, kann das von der Arbeitsspindel 20 aufgenommene Werkzeug durch den Werkzeugwechsler 50 ausgewechselt werden.

Dabei sei an dieser Stelle darauf hingewiesen, dass es unerheblich ist, ob nach dem Erzeugen des Werkzeugwechselbereiches 80 zuerst der Werkzeugwechsler 50 in den Werkzeugwechselbereich 80 verfahren wird oder zuerst die Arbeitsspindel 20 in dem Werkzeugwechselbereich 80 positioniert wird.

Weiterhin ist in der Schnittansicht der erfindungsgemäßen Werkzeugmaschine 100 verdeutlicht, dass der Träger 22 und somit die Arbeitsspindel 20 durch einen entsprechenden Antrieb 25 in y-Richtung verfahren werden kann, unabhängig von der Verfahrbewegung der ersten Abdeckung 30, die durch einen separaten Antrieb 35 bewerkstelligt wird.

Ferner ist in Fig. 5 verdeutlicht, dass das Ablaufblech 90 Kühlschmiermittel und Materialspäne, die von der ersten Abdeckung 30 während des Werkzeugwechsels abtropfen/abfallen können, auffängt und sie einem Sammelbereich (z.B. unterhalb des Maschinentisches 10) zuführt, so dass die Materialspäne und das verbrauchte Kühlschmiermittel nicht mehr den Bearbeitungsprozess des Werkstücks beeinflussen können.

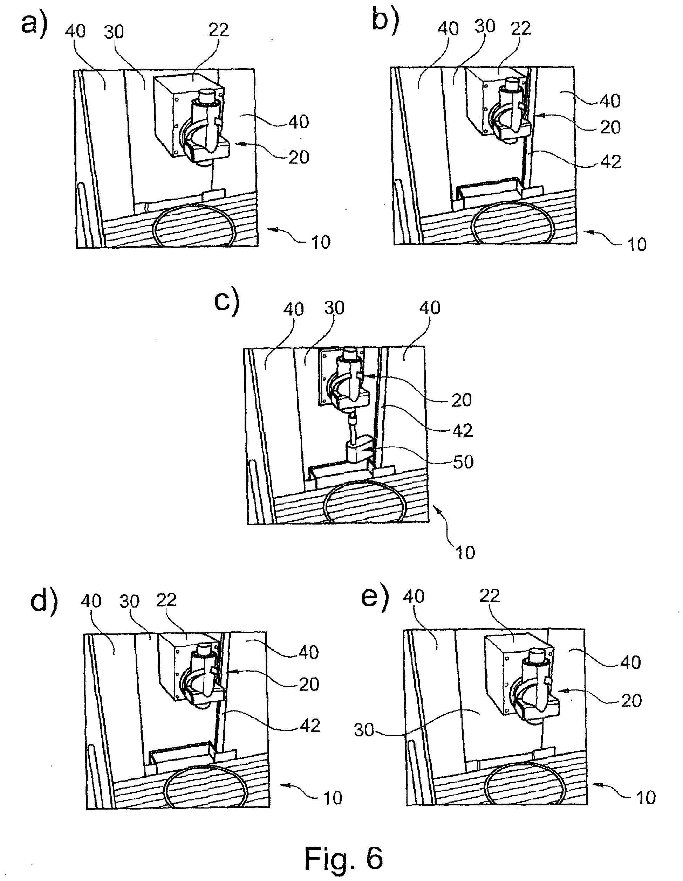

Fig. 6 zeigt schematisch den Ablauf eines Werkzeugwechsels in der erfindungsgemäßen Werkzeugmaschine 100.

Zu Beginn wird in Darstellung a) die Werkzeugmaschine 100 im geschlossenen Zustand gezeigt, bei dem die erste Abdeckung 30 und die zweite Abdeckung 40 im Wesentlichen koplanar zueinander angeordnet sind.

In der Darstellung b) ist nun gezeigt, dass die erste Abdeckung 30 derart verfahren wurde, dass der Werkzeugwechselbereich 80 (Bereich zwischen erster Abdeckung 30 und dem Maschinentisch 10) in unmittelbarer Nähe bzw. angrenzend zum Arbeitsraum 70 erzeugt wurde und die Zugangsfläche 42 zum Werkzeugwechselbereich hin freigegeben wurde.

Darstellung c) zeigt nun, wie die Arbeitsspindel 20 in dem Werkzeugwechselbereich 80 positioniert ist und der Werkzeugwechsler 50 durch die Zugangsfläche 42 hindurch in den Werkzeugwechselbereich 80 verfahren wurde, so dass ein von der Arbeitsspindel 20 aufgenommenes Werkzeug durch den Werkzeugwechsler 50 ausgewechselt/ ausgetauscht werden kann.

Ist der Austausch/Wechsel des Werkzeugs erfolgt (siehe hierzu Darstellung d)), zieht sich der Werkzeugwechsler 50 durch die Zugangsfläche 42 aus dem Werkzeugwechselbereich 80 zurück und ermöglicht hierdurch ein Verfahren der ersten Abdeckung 30 zum Schließen der Zugangsfläche 42 und des Werkzeugwechselbereiches 80.

Darstellung e) zeigt wieder die erfindungsgemäße Werkzeugmaschine 100 in ihrem geschlossenen Zustand, bei dem die erste Abdeckung 30 und die zweite Abdeckung 40 wieder im Wesentlichen koplanar zueinander angeordnet sind.

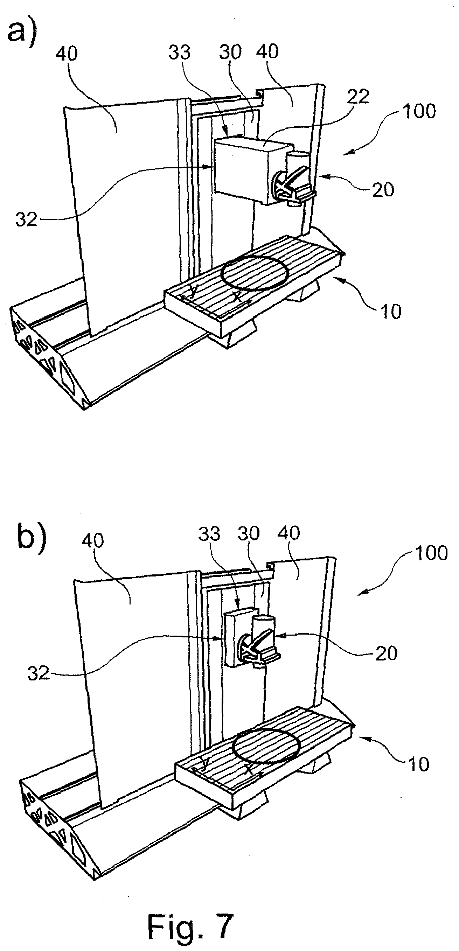

Fig. 7 zeigt schematisch das Verfahren der Arbeitsspindel 20 unabhängig von der ersten Abdeckung 30, wobei die erste Abdeckung 30 zudem Abstreifer 33 für das Abstreifen von Kühlschmiermitteln und Materialspänen aufweist.

Fig. 7 zeigt dabei wieder die erfindungsgemäße Werkzeugmaschine 100, die im Wesentlichen auf die Elemente der ersten Abdeckung 30 und der zweiten Abdeckung 40 sowie des Maschinentisches 10 und der Arbeitsspindel 20 reduziert wurde.

Jedoch weist die erste Abdeckung 30 ferner eine Öffnung 32 auf, durch die hindurch sich der Träger 22 erstreckt, an dessen Endabschnitt die Arbeitsspindel 20 angeordnet ist. Dadurch ist es möglich, dass der Träger 22 die Arbeitsspindel 20 in y-Richtung bewegen/verfahren kann, unabhängig von der Position bzw. von einem Verfahren der ersten Abdeckung 30.

Zudem ist es vorteilhaft, wenn die erste Abdeckung 30 im Bereich der Öffnung 32 (oder die Öffnung 32 selbst) mindestens einen Abstreifer 33 aufweist, der Kühlschmierstoffe und Materialspäne, die bei der Bearbeitung des Werkstücks anfallen und sich auf dem Träger 22 ablagern können, vom Träger 22 abstreift.

Dies kann insbesondere dann vorteilhaft sein, wenn die Arbeitsspindel 20 vor einem Werkzeugwechsel oder nach längerer Bearbeitung eines Werkstücks ganz nah an der ersten Abdeckung 30 positioniert wird, damit eine größtmögliche Anzahl von Materialspänen bzw. eine größtmögliche Menge von Kühlschmiermittel vom Träger abgestreift werden kann. Das vom Träger 22 abgestreifte Kühlschmiermittel mit Materialspänen kann so der Aufbereitung zugeführt werden und lagert sich nicht über einen längeren Zeitraum auf dem Träger 22 an.

Die Darstellung a) zeigt nun hierbei die Position des Trägers 22 mit der Arbeitsspindel 20, wenn dieser im Wesentlichen am weitesten ausgefahren ist (maximaler Zustellweg der Arbeitsspindel 20 in y-Richtung). Und die Darstellung b) zeigt die Arbeitsspindel 20, wenn sie im Wesentlichen bis an die erste Abdeckung 30 heran verfahren bzw. positioniert wurde, wodurch das Kühlschmiermittel und die Materialspäne vom Träger 22 abgestreift wurden.

Fig. 8 zeigt schematisch die erfindungsgemäße Werkzeugmaschine 100 mit einem seitlich angebrachten Werkzeugmagazin 60 und Linearachse 62 für den Werkzeugwechsler 50.

Um das Werkzeugmagazin 60 sowie die Linearachse besser erkennen zu können, wurde die erfindungsgemäße Werkzeugmaschine 100 in dieser Figur weiter um die Elemente der ersten Abdeckung 30 und der zweiten Abdeckung 40 reduziert.

Wie gezeigt, ist das Werkzeugmagazin 60 in x-Richtung seitlich neben dem Träger 22 an dem verfahrbaren Ständer angeordnet und weist zusätzlich die Linearachse 62 auf, durch die der Werkzeugwechsler 50 durch die Zugangsfläche 42 (hier nicht gezeigt) hindurch in den erzeugten Werkzeugwechselbereich 80 verfahren werden kann, um den Werkzeugwechsel an der Arbeitsspindel 20 durchzuführen.

Ein deutlicher Vorteil dieses Aufbaus liegt darin, dass das Werkzeugmagazin 60 parallel zu einer Verfahrbewegung der Arbeitsspindel 20 bzw. des Trägers 22 in x-Richtung verfährt. Das bedeutet, dass der Werkzeugwechsel im Wesentlichen an jeder beliebigen Position der Arbeitsspindel 20 entlang der x-Achse erfolgen kann, ohne dass eine zusätzliche Zustellung der Arbeitsspindel 20 in eine spezifische "Werkzeugwechselposition" entlang der x-Achse erfolgen muss.

Ein derartiger Aufbau ermöglicht es zudem, dass der Schlitten für die Zustellung der Arbeitsspindel 20 in y-Richtung symmetrisch aufgebaut und konstruktiv geschlossen sein kann. Weiterhin ist es dadurch möglich, Antriebe für den Schlitten zentral anzuordnen und, bei Verwendung der Arbeitsspindel 20 an dem Träger 22 als Schwenkkopf, einen geringen Abstand zwischen der B-Achse, um die sich der Schwenkkopf drehen kann, und der das Werkzeug aufnehmenden Spindelnase zu ermöglichen, was Vorteile in der Maschinendynamik und der Steifigkeit mit sich bringt.

Ferner kann das Werkzeugmagazin 60 als Kettenmagazin, als Radmagazin oder aber auch als Regalmagazin ausgeführt sein. Ferner kann auch noch eine zusätzliche Zuführeinheit vorgesehen sein, die das Werkzeug aus dem entsprechenden Magazin entnimmt und dem Werkzeugwechsler 50 zuführt, bevor dieser das Werkzeug in die Arbeitsspindel 20 einwechselt. Die hier genannten Beispiele sollen wieder als nicht einschränkend aufgefasst werden und können weitere Ausführungsbeispiele umfassen.

Fig. 9 zeigt schematisch eine im Stand der Technik bekannte Werkzeugmaschine, bei der der Werkzeugwechsel im Bereich des Arbeitsraumes stattfindet.

Hierbei ist zu sehen, wie im Stand der Technik üblicherweise bzw. sehr häufig der Werkzeugwechsler 50 an die Arbeitsspindel 20 heranfährt, um das Werkzeug zu wechseln. Dafür wird jedoch der Arbeitsraum der Werkzeugmaschine beschnitten (Arbeitsspindel 20 steht über dem Maschinentisch 10 während das Werkzeug durch den Werkzeugwechsler 50 gewechselt/ausgetauscht wird). Das birgt jedoch die Gefahren, dass es zu einer Kollision des Werkzeugwechslers 50 mit dem Werkstück und/oder z.B. dem Spannmittel des Werkstücks kommen kann.

Aufgrund dessen ist es von Vorteil, eine Werkzeugmaschine der Art der Fahrständer gemäß der erfindungsgemäßen Werkzeugmaschine weiterzubilden, um die entsprechenden Nachteile der bekannten Fahrständermaschinen zu umgehen und eine schnellere, zuverlässigere und präzisere Werkzeugmaschine bereit zu stellen.

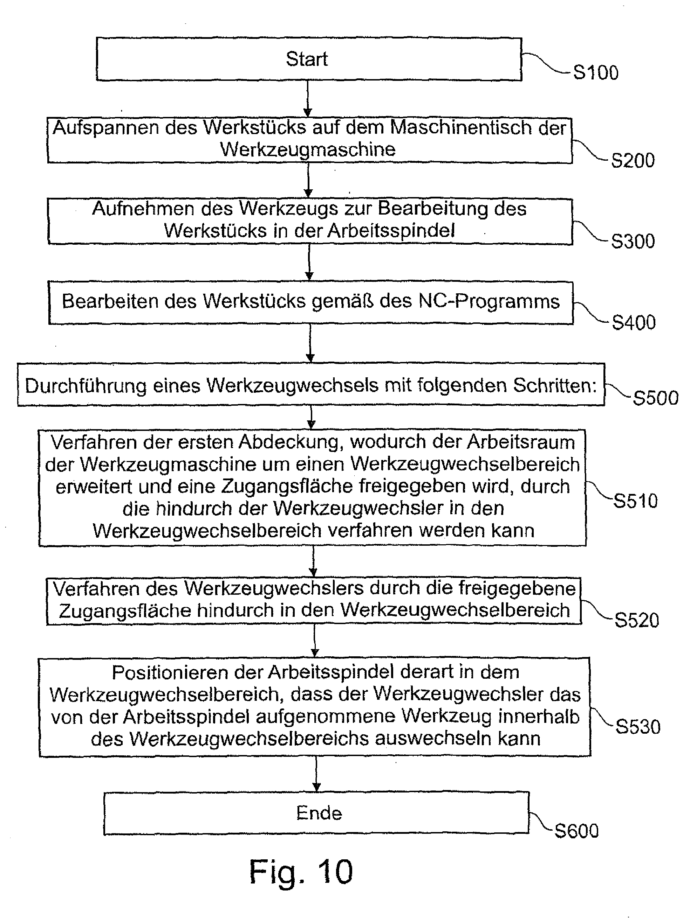

Fig. 10 zeigt ein Ablaufdiagramm eines Ausführungsbeispiels des erfindungsgemäßen Verfahrens zur Bearbeitung des Werkstücks.

Zunächst wird im Schritt S200 das Werkstück auf dem Maschinentisch 10 der erfindungsgemäßen Werkzeugmaschine 100 aufgespannt. Dies kann mit den verschiedensten Spannmitteln wie Spannpratzen, mechanische oder hydraulische Werkstückspanner, verschiedenste Backenfutter etc. erfolgen.

Im nächsten Schritt S300 wird nun das Werkzeug, mittels diesem das Werkstück bearbeitet werden soll, in der Arbeitsspindel 20 aufgenommen. In der Arbeitsspindel 20 können dafür verschiedenste Werkzeuge aufgenommen werden, insbesondere Werkzeuge zur spanenden Bearbeitung des Werkstücks, die beispielsweise eine standardisierte Aufnahme wie einen Hohlschaftkegel oder einen Steilkegel aufweisen. Es können aber auch andere, von den Herstellern der Werkzeuge spezifische Werkzeugaufnahmen von der Arbeitsspindel 20 aufgenommen werden. Eine entsprechend gerüstete Arbeitsspindel 20 ist dafür jedoch Voraussetzung.

Nun kann die Bearbeitung, insbesondere die spanende Bearbeitung des Werkstücks durch das von der Arbeitsspindel 20 aufgenommene Werkzeug erfolgen (Schritt S400). Dabei wird das Werkzeug durch die Arbeitsspindel 20 und durch die Zustellbewegungen der Arbeitsspindel entlang der x-, y- und z-Achse an dem Werkstück entlang bzw. in das Werkstück hinein gemäß des NC-Programm geführt.

Es können aber auch zusätzliche Zustellbewegungen um eine B-Achse (wenn die Arbeitsspindel 20 beispielsweise als Schwenkkopf ausgeführt ist) oder um eine C-Achse (z.B. durch einen schwenkbaren Maschinentisch 10 etc.) erfolgen.

Ist nun die Bearbeitung des Werkstücks mit dem in der Arbeitsspindel 20 aufgenommenen Werkzeug abgeschlossen bzw. derzeit unterbrochen, kann im darauf folgenden Schritt S500 ein Werkzeugwechsel erfolgen.

Dafür wird zunächst im Schritt S510 die erste Abdeckung 30 verfahren, wodurch der Arbeitsraum 70 der Werkzeugmaschine 100 um den Werkzeugwechselbereich 80 erweitert wird. Dafür wird die erste Abdeckung 30 in eine Richtung verfahren, die aus dem Arbeitsraum 70 heraus gerichtet ist.

Zudem wird durch die Verfahrbewegung der ersten Abdeckung 30 die Zugangsfläche 42 freigegeben, durch die hindurch der Werkzeugwechsler 50 in den Werkzeugwechselbereich 80 verfahren werden kann.

Im nun folgenden Schritt S520 wird entsprechend der Werkzeugwechsler 50 durch eine Linearachse 62 des Werkzeugmagazins 60 durch die freigegebene Zugangsfläche 42 hindurch in den Werkzeugwechselbereich 80 verfahren.

Im Anschluss erfolgt die Positionierung der Arbeitsspindel 20 in dem Werkzeugwechselbereich 80, so dass der Werkzeugwechsler 50 das von der Arbeitsspindel 20 aufgenommene Werkzeug innerhalb des Werkzeugwechselbereiches 80 auswechseln/austauschen kann (Schritt S530).

Im Anschluss daran kann die Bearbeitung des Werkstücks fortgesetzt werden.

Vorstehend wurden Beispeile bzw. Ausführungsbeispiele der vorliegenden Erfindung sowie deren Vorteile detailliert unter Bezugnahme auf die beigefügten Figuren beschrieben.

### LISTE DER BEZUGSZEICHEN

- **10**: Maschinentisch
- **12**: Aufspannfläche des Maschinentisches
- **20**: Arbeitsspindel
- **22**: Träger
- **25**: Antrieb des Trägers
- **30**: erste Abdeckung
- **32**: Öffnung in der ersten Abdeckung
- **33**: Abstreifer
- **35**: Antrieb der ersten Abdeckung
- **40**: zweite Abdeckung
- **42**: Zugangsfläche
- **50**: Werkzeugwechsler
- **60**: Werkzeugmagazin
- **62**: Linearachse für Werkzeugwechsler
- **70**: Arbeitsraum der Werkzeugmaschine
- **80**: Werkzeugwechselbereich
- **90**: Blech zum Ablaufen von Kühlschmierstoff und Materialspänen
- **100**: Werkzeugmaschine

## Patentansprüche

1. Werkzeugmaschine (100) zum Bearbeiten eines Werkstücks, mit
- einem Maschinentisch (10) zum Aufspannen des Werkstücks,
- einer Arbeitsspindel (20) zum Aufnehmen eines Werkzeugs zur Bearbeitung des Werkstücks,
- einem Arbeitsraum, der im Wesentlichen durch den Maschinentisch (10) und mindestens einer ersten Abdeckung (30) begrenzt wird, und
- einem Werkzeugwechsler (50), der außerhalb des Arbeitsraums angeordnet ist und der zum Wechseln des in der Arbeitsspindel (20) aufgenommenen Werkzeugs eingerichtet ist,
wobei die Werkzeugmaschine (100) ferner dazu eingerichtet ist, dass bei einem Werkzeugwechsel
- die erste Abdeckung (30) verfahren wird, wodurch der Arbeitsraum der Werkzeugmaschine (100) um einen Werkzeugwechselbereich (80) erweitert und eine Zugangsfläche (42) freigegeben wird, und
- die Arbeitsspindel (20) derart in dem Werkzeugwechselbereich (80) positioniert wird, dass der Werkzeugwechsler (50) das von der Arbeitsspindel (20) aufgenommene Werkzeug innerhalb des Werkzeugwechselbereichs (80) auswechseln kann,
**dadurch gekennzeichnet, dass** durch die Zugangsfläche (42) hindurch der Werkzeugwechsler (50) in den Werkzeugwechselbereich (80) verfahren werden kann.

2. Werkzeugmaschine (100) nach Anspruch 1, **dadurch gekennzeichnet, dass**
der Arbeitsraum der Werkzeugmaschine (100) im Wesentlichen durch den Maschinentisch (10), der ersten Abdeckung (30) und einer zweiten Abdeckung (40) begrenzt wird.

3. Werkzeugmaschine (100) nach Anspruch 2, **dadurch gekennzeichnet, dass**
die freigegebene Zugangsfläche (42) im Wesentlichen senkrecht zu der zweiten Abdeckung (40) verläuft; und/oder
die freigegebene Zugangsfläche (42) im Wesentlichen senkrecht zu dem Maschinentisch (10) verläuft.

4. Werkzeugmaschine (100) nach einem der Ansprüche 2 oder 3, **dadurch gekennzeichnet, dass**
die Zugangsfläche (42) während der Bearbeitung des Werkstücks durch die erste Abdeckung (30) und die zweite Abdeckung (40) von dem Arbeitsraum der Werkzeugmaschine (100) getrennt ist, wobei die erste Abdeckung (30) und die zweite Abdeckung (40) während der Bearbeitung des Werkstücks im Wesentlichen koplanar zueinander angeordnet sind und den Werkzeugwechselbereich (80) von dem Arbeitsraum trennen.

5. Werkzeugmaschine (100) nach einem der Ansprüche 1 bis 4, **dadurch gekennzeichnet, dass**
mindestens die erste Abdeckung (30) in einer Richtung aus dem Arbeitsraum heraus verfahren wird, um den Arbeitsraum der Werkzeugmaschine (100) um den Werkzeugwechselbereich (80) zu erweitern.

6. Werkzeugmaschine (100) nach Anspruch 5, **dadurch gekennzeichnet, dass**
mindestens die erste Abdeckung (30) durch einen separaten Antrieb (35) unabhängig von dem Antrieb zum Verfahren der Arbeitsspindel (20) verfahren wird.

7. Werkzeugmaschine (100) nach einem der Ansprüche 1 bis 6, **dadurch gekennzeichnet, dass**
die Arbeitsspindel (20) an einem Endabschnitt eines verfahrbaren Trägers (23) angeordnet ist, der in Längsrichtung durch eine Öffnung (32) in der ersten Abdeckung (30) hindurch verfährt.

8. Werkzeugmaschine (100) nach einem der Ansprüche 1 bis 7, **dadurch gekennzeichnet, dass**
die Aufspannfläche des Maschinentisches (10) eine x-y-Ebene aufspannt, und
die erste Abdeckung (30) im Wesentlichen eine x-z-Ebene aufspannt.

9. Werkzeugmaschine (100) nach Anspruch 8, **dadurch gekennzeichnet, dass**
die Arbeitsspindel (20) dadurch in dem Werkzeugwechselbereich (80) positioniert wird, dass der Träger (23) entlang seiner Längsrichtung verfahren wird, um die Arbeitsspindel (20) in Richtung der y-Achse zu positionieren.

10. Werkzeugmaschine (100) nach Anspruch 8 oder 9, **dadurch gekennzeichnet, dass**
der Werkzeugwechsler (50) an einem Werkzeugmagazin (60) angeordnet ist, das in x-Richtung seitlich beabstandet neben dem Träger (23) angeordnet ist.

11. Werkzeugmaschine (100) nach Anspruch 10, **dadurch gekennzeichnet, dass**
während der Bearbeitung des Werkstücks das Werkzeugmagazin (60) durch die erste Abdeckung (30) und die zweite Abdeckung (40) von dem Arbeitsraum der Werkzeugmaschine (100) getrennt ist, wobei die erste Abdeckung (30) und die zweite Abdeckung (40) während der Bearbeitung des Werkstücks im Wesentlichen koplanar zueinander angeordnet sind; und/oder
das Werkzeugmagazin (60) und der Werkzeugwechsler (50) während des Verfahrens des Trägers (23) in x-Richtung parallel zu dem Träger (23) verfahren werden.

12. Werkzeugmaschine (100) nach einem der Ansprüche 10 oder 11, **dadurch gekennzeichnet, dass**
das Werkzeugmagazin (60) eine Linearachse (62) aufweist, die den Werkzeugwechsler (50) durch die Zugangsfläche (42) hindurch in den Werkzeugwechselbereich (80), um den der Arbeitsraum der Werkzeugmaschine (100) erweitert wurde, verfährt.

13. Werkzeugmaschine (100) nach Anspruch 7, **dadurch gekennzeichnet, dass**
die Öffnung (32) in der ersten Abdeckung (30), durch die sich der Träger (23) hindurch erstreckt, mindestens einen Abstreifer (33) aufweist, der beim Verfahren der Arbeitsspindel (20) in Richtung der ersten Abdeckung an dem Träger (23) befindliche Materialspäne und/oder Kühlschmierstoffe von dem Träger (23) abstreift; und
die Werkzeugmaschine (100) ferner ein Ablaufblech (90) unterhalb der ersten Abdeckung (30) aufweist, das während des Werkzeugwechsels von der ersten Abdeckung (30) abfließende Kühlschmierstoffe sowie Materialspäne auffängt und zu einem Sammelbereich ableitet.

14. Verfahren zur Bearbeitung eines Werkstücks auf einer Werkzeugmaschine (100) gemäß eines NC-Programms, wobei die Werkzeugmaschine (100) einen Maschinentisch (10) zum Aufspannen des Werkstücks, eine Arbeitsspindel (20) zum Aufnehmen eines Werkzeugs zur Bearbeitung des Werkstücks, einen Arbeitsraum, der im Wesentlichen durch den Maschinentisch (10) und mindestens einer ersten Abdeckung (30) begrenzt wird, und einen Werkzeugwechsler (50), der außerhalb des Arbeitsraums angeordnet ist und der zum Wechseln des in der Arbeitsspindel (20) aufgenommenen Werkzeugs eingerichtet ist, aufweist,
wobei das Verfahren zur Bearbeitung des Werkstücks folgende Schritte aufweist:
- Aufspannen des Werkstücks auf dem Maschinentisch (10) der Werkzeugmaschine (100),
- Aufnehmen des Werkzeugs zur Bearbeitung des Werkstücks in der Arbeitsspindel (20),
- Bearbeiten des Werkstücks gemäß des NC-Programms,
wobei folgende Schritte bei einem Werkzeugwechsel durchgeführt werden:
- Verfahren der ersten Abdeckung (30), wodurch der Arbeitsraum der Werkzeugmaschine (100) um einen Werkzeugwechselbereich (80) erweitert und eine Zugangsfläche (42) freigegeben wird, durch die hindurch der Werkzeugwechsler (50) in den Werkzeugwechselbereich (80) verfahren werden kann,
- Verfahren des Werkzeugwechslers (50) durch die freigegebene Zugangsfläche (42) hindurch in den Werkzeugwechselbereich (80), und
- Positionieren der Arbeitsspindel (20) derart in dem Werkzeugwechselbereich (80), dass der Werkzeugwechsler (50) das von der Arbeitsspindel (20) aufgenommene Werkzeug innerhalb des Werkzeugwechselbereichs (80) auswechseln kann.

15. Verfahren nach Anspruch 14, **dadurch gekennzeichnet, dass**
das Verfahren des Werkzeugwechslers (50) durch die freigegebene Zugangsfläche (42) hindurch in den Werkzeugwechselbereich (80) unabhängig von dem Schritt des Positionierens der Arbeitsspindel (20) in dem Werkzeugwechselbereich (80) erfolgt; und/oder
ein Verfahren der Arbeitsspindel (20) in Richtung der ersten Abdeckung (30) unabhängig von dem Verfahren der ersten Abdeckung (30) zur Erweiterung des Arbeitsraums um den Werkzeugwechselbereich (80) erfolgt.

## Claims

1. Machine tool (100) for machining a workpiece, with
- a machine table (10) for clamping the workpiece,
- a working spindle (20) for receiving a tool for machining the workpiece,
- a work space substantially delimited by the machine table (10) and by at least a first covering (30), and
- a tool changer (50) which is arranged outside the work space and which is configured for changing the tool received in the working spindle (20),
wherein the machine tool (100) is further configured such that during a tool change
- the first covering (30) is moved, thereby extending the work space of the machine tool (100) by a tool change area (80) and exposing an access area (42), and
- the working spindle (20) is positioned in the tool change area (80) in such a way that the tool changer (50) can change the tool received in the working spindle (20) within the tool change area (80),
**characterized in that**
the tool changer (50) can be moved through the access area (42) into the tool change area (80).

2. Machine tool (100) according to claim 1, **characterized in that**
the work space of the machine tool (100) is substantially delimited by the machine table (10), the first covering (30) and a second covering (40).

3. Machine tool (100) according to claim 2, **characterized in that**
the exposed access area (42) is substantially perpendicular to the second covering (40); and/or
the exposed access area (42) is substantially perpendicular to the machine table (10).

4. Machine tool (100) according to one of claims 2 or 3, **characterized in that**
the access area (42) is separated from the work space of the machine tool (100) by the first covering (30) and by the second covering (40) during the machining of the workpiece, wherein the first covering (30) and the second covering (40) are arranged substantially coplanar with each other during the machining of the workpiece and separate the tool change area (80) from the work space.

5. Machine tool (100) according to any one of claims 1 to 4, **characterized in that**
at least the first covering (30) is moved in a direction out of the work space to extend the work space of the machine tool (100) by the tool change area (80).

6. Machine tool (100) according to claim 5, **characterized in that**
at least the first covering (30) is moved by a separate drive (35) independently of the drive for moving the working spindle (20).

7. Machine tool (100) according to any one of claims 1 to 6, **characterized in that**
the working spindle (20) is arranged at an end portion of a movable carrier (23) which travels longitudinally through an opening (32) in the first covering (30).

8. Machine tool (100) according to any one of claims 1 to 7, **characterized in that**
the clamping surface of the machine table (10) spans an x-y plane, and the first covering (30) substantially spans an x-z plane.

9. Machine tool (100) according to claim 8, **characterized in that**
the working spindle (20) is positioned in the tool change area (80) by moving the carrier (23) along its longitudinal direction to position the working spindle (20) in the direction of the y-axis.

10. Machine tool (100) according to claim 8 or 9, **characterized in that**
the tool changer (50) is arranged at a tool magazine (60), which is arranged laterally spaced with respect to the x-direction next to the carrier (23).

11. Machine tool (100) according to claim 10, **characterized in that**
during the machining of the workpiece, the tool magazine (60) is separated from the work space of the machine tool (100) by the first covering (30) and by the second covering (40), the first covering (30) and the second covering (40) being arranged substantially coplanar with each other during the machining of the workpiece; and/or
the tool magazine (60) and the tool changer (50) are moved in the x-direction parallel to the carrier (23) while the carrier (23) is moved.

12. Machine tool (100) according to any one of claims 10 or 11, **characterized in that**
the tool magazine (60) has a linear axis (62) which moves the tool changer (50) through the access area (42) into the tool change area (80), which extended the work space of the machine tool (100).

13. Machine tool (100) according to claim 7, **characterized in that**
the opening (32) in the first covering (30) through which the carrier (23) extends, has at least one scraper (33) which scrapes off material chips and/or cooling lubricants located on the carrier (23) from the carrier (23) when the working spindle (20) moves in the direction of the first covering; and
the machine tool (100) further comprises a drain plate (90) below the first covering (30), which catches cooling lubricants and material chips dropping off the first covering (30) and diverts them to a collection area during the tool change.

14. Method for machining a workpiece on a machine tool (100) according to an NC program, wherein the machine tool (100) comprises a machine table (10) for clamping the workpiece, a working spindle (20) for receiving a tool for machining the workpiece, a work space substantially delimited by the machine table (10) and at least by a first covering (30), and a tool changer (50) arranged outside the work space and configured to change the tool received in the working spindle (20),
wherein the method for machining the workpiece comprises the following steps:
- clamping the workpiece on the machine table (10) of the machine tool (100),
- receiving the tool for machining the workpiece in the working spindle (20),
- machining the workpiece according to the NC program,
where the following steps are performed during a tool change:
- moving the first covering (30), thereby expanding the work space of the machine tool (100) to extend it by a tool change area (80) and exposing an access area (42) through which the tool changer (50) can be moved into the tool change area (80),
- moving the tool changer (50) through the exposed access area (42) into the tool change area (80), and
- positioning the working spindle (20) within the tool change area (80) in such a way that the tool changer (50) can change the tool received in the working spindle (20) within the tool change area (80).

15. Method according to claim 14, **characterized in that**
moving the tool changer (50) through the exposed access area (42) into the tool change area (80) takes place independently of the step of positioning the working spindle (20) within the tool change area (80); and/or
moving the working spindle (20) in the direction of the first covering (30) takes place independently of moving the first covering (30) for extending the work space by the tool change area (80).

## Revendications

1. Machine-outil (100) pour usiner une pièce, comprenant
- une table de machine (10) pour serrer la pièce,
- une broche de travail (20) pour recevoir un outil pour l'usinage de la pièce,
- un espace de travail, qui est délimité sensiblement par la table de machine (10) et au moins un premier cache (30), et
- un changeur d'outil (50), qui est disposé à l'extérieur de l'espace de travail et qui est conçu pour changer l'outil reçu dans la broche de travail (20),
dans laquelle la machine-outil (100) est en outre conçue pour que, lors d'un changement d'outil
- le premier cache (30) soit déplacé, moyennant quoi l'espace de travail de la machine-outil (100) est élargi d'une zone de changement d'outil (80) et une surface d'accès (42) est libérée, et
- la broche de travail (20) est positionnée dans la zone de changement d'outil (80) de telle sorte que le changeur d'outil (50) peut remplacer l'outil reçu par la broche de travail (20) à l'intérieur de la zone de changement d'outil (80),
**caractérisée en ce que** le changeur d'outil (50) peut être déplacé dans la zone de changement d'outil (80) à travers la surface d'accès (42).

2. Machine-outil (100) selon la revendication 1, **caractérisée en ce que**
l'espace de travail de la machine-outil (100) est délimité sensiblement par la table de machine (10), le premier cache (30) et un deuxième cache (40).

3. Machine-outil (100) selon la revendication 2, **caractérisée en ce que**
la surface d'accès (42) libérée s'étend sensiblement perpendiculairement au deuxième cache (40) ; et/ou
la surface d'accès (42) libérée s'étend sensiblement perpendiculairement à la table de machine (10).

4. Machine-outil (100) selon l'une quelconque des revendications 2 ou 3, **caractérisée en ce que**
la surface d'accès (42) pendant l'usinage de la pièce est séparée de l'espace de travail de la machine-outil (100) par le premier cache (30) et le deuxième cache (40), dans laquelle le premier cache (30) et le deuxième cache (40) pendant l'usinage de la pièce sont disposés sensiblement de manière coplanaire l'un par rapport à l'autre et séparent la zone de changement d'outil (80) de l'espace de travail.

5. Machine-outil (100) selon l'une quelconque des revendications 1 à 4, **caractérisée en ce que**
au moins le premier cache (30) est déplacé dans une direction à l'extérieur de l'espace de travail, afin d'élargir l'espace de travail de la machine-outil (100) de la zone de changement d'outil (80).

6. Machine-outil (100) selon la revendication 5, **caractérisée en ce que**
au moins le premier cache (30) est déplacé par un entraînement (35) séparé indépendamment de l'entraînement pour le déplacement de la broche de travail (20).

7. Machine-outil (100) selon l'une quelconque des revendications 1 à 6, **caractérisée en ce que**
la broche de travail (20) est disposée sur une partie d'extrémité d'un support (23) déplaçable, qui se déplace dans la direction longitudinale à travers une ouverture (32) dans le premier cache (30).

8. Machine-outil (100) selon l'une quelconque des revendications 1 à 7, **caractérisée en ce que**
la surface de serrage de la table de machine (10) sous-tend un plan x-y, et
le premier cache (30) sous-tend sensiblement un plan x-z.

9. Machine-outil (100) selon la revendication 8, **caractérisée en ce que**
la broche de travail (20) est positionnée dans la zone de changement d'outil (80) du fait que le support (23) est déplacé le long de sa direction longitudinale, afin de positionner la broche de travail (20) en direction de l'axe y.

10. Machine-outil (100) selon la revendication 8 ou 9, **caractérisée en ce que**
le changeur d'outil (50) est disposé sur un magasin d'outil (60), qui est disposé à côté du support (23) de manière latéralement espacée dans la direction x.

11. Machine-outil (100) selon la revendication 10, **caractérisée en ce que**
pendant l'usinage de la pièce le magasin d'outil (60) est séparé de l'espace de travail de la machine-outil (100) par le premier cache (30) et le deuxième cache (40), dans laquelle le premier cache (30) et le deuxième cache (40) pendant l'usinage de la pièce sont disposés sensiblement de manière coplanaire l'un par rapport à l'autre ; et/ou
le magasin d'outil (60) et le changeur d'outil (50) pendant le déplacement du support (23) sont déplacés dans la direction x parallèlement au support (23).

12. Machine-outil (100) selon l'une quelconque des revendications 10 ou 11, **caractérisée en ce que**
la machine-outil (60) présente un axe linéaire (62), qui déplace le changeur d'outil (50) à travers la surface d'accès (42) dans la zone de changement d'outil (80), de laquelle l'espace de travail de la machine-outil (100) a été élargie.

13. Machine-outil (100) selon la revendication 7, **caractérisée en ce que**
l'ouverture (32) dans le premier cache (30), à travers laquelle le support (23) s'étend, présente au moins un racleur (33), qui lors du déplacement de la broche de travail (20) en direction du premier cache, racle du support (23) des copeaux de matériau et/ou réfrigérants lubrifiants se trouvant sur le support (23) ; et
la machine-outil (100) présente en outre une tôle d'écoulement (90) au-dessous du premier cache (30), qui pendant le changement d'outil collecte des lubrifiants réfrigérants s'évacuant du premier cache (30) ainsi que des copeaux de matériau et les dévie vers une zone de collecte.

14. Procédé pour l'usinage d'une pièce sur une machine-outil (100) selon un programme de commande numérique, dans lequel la machine-outil (100) présente une table de machine (10) pour le serrage de la pièce, une broche de travail (20) pour la réception d'un outil pour l'usinage de la pièce, un espace de travail, qui est sensiblement délimité par la table de machine (10) et au moins un premier cache (30), et un changeur d'outil (50), qui est disposé à l'extérieur de l'espace de travail et qui est conçu pour le changement de l'outil reçu dans la broche de travail (20),
dans lequel le procédé pour l'usinage de la pièce présente les étapes suivantes :
- le serrage de la pièce sur la table de machine (10) de la machine-outil (100),
- la réception de l'outil pour l'usinage de la pièce dans la broche de travail (20),
- l'usinage de la pièce selon le programme de commande numérique,
dans lequel les étapes suivantes lors d'un changement d'outil sont mises en oeuvre :
- le déplacement du premier cache (30), moyennant quoi l'espace de travail de la machine-outil (100) est élargi d'une zone de changement d'outil (80) et une surface d'accès (42) est libérée, à travers laquelle le changeur d'outil (50) peut être déplacé dans la zone de changement d'outil (80),
- le déplacement du changeur d'outil (50) à travers la surface d'accès (42) libérée dans la zone de changement d'outil (80), et
- le positionnement de la broche de travail (20) dans la zone de changement d'outil (80), de telle sorte que le changeur d'outil (50) peut remplacer l'outil reçu par la broche de travail (20) à l'intérieur de la zone de changement d'outil (80).

15. Procédé selon la revendication 14, **caractérisé en ce que**
le déplacement du changeur d'outil (50) à travers la surface d'accès (42) libérée dans la zone de changement d'outil (80) s'effectue indépendamment de l'étape du positionnement de la broche de travail (20) dans la zone de changement d'outil (80) ; et/ou
un déplacement de la broche de travail (20) en direction du premier cache (30) s'effectue indépendamment du déplacement du premier cache (30) pour élargir l'espace de travail de la zone de changement d'outil (80).
